# FASCICULE DE BREVET EUROPEEN

(11) **EP 2 853 830 B1**
(45) Date de publication et mention de la délivrance du brevet: **13.12.2023**
(21) Numéro de dépôt: 14174676.8
(22) Date de dépôt: 27.06.2014
(51) Int. Cl.: F24F 7/02, F24F 11/00

(54) **Module de système de ventilation et système de ventilation de bâtiment pouvant être piloté à distance via l'Internet**
Belüftungssystemmodul und Gebäudebelüftungssystem, das über Internet ferngesteuert werden kann
Ventilation system module and building ventilation system which can be controlled remotely via the internet

(30) Priorité: 27.06.2013 FR 1356240
(43) Date de publication de la demande: 01.04.2015
(73) Titulaire: Amphoux, André, F-75012 Paris (FR)
(72) Inventeur: Amphoux, André, F-75012 Paris (FR)
(74) Mandataire: Derambure Conseil

(56) Documents cités:
- WO-A2-2008/016500
- FR-A1- 2 851 641
- US-A1- 2007 114 295
- US-A1- 2010 312 396
- US-B1- 6 643 611

## Description

Le document EP 0 972 991 décrit un dispositif mixte, statique/dynamique pour l'évacuation de fluide gazeux, notamment de gaz rejetés ou de fumées. Ce dispositif comprend en premier lieu un élément supérieur et un élément inférieur, superposés, coaxiaux, rigidement fixés l'un à l'autre. L'élément inférieur comprend un fond inférieur et un chapeau inférieur, traversés par un tuyau débouchant du côté du chapeau inférieur dans l'espace compris entre les deux éléments. L'autre extrémité du tuyau est destinée à être fixée à l'arrivée des fluides gazeux. Le fond inférieur et le chapeau inférieur sont fixés l'un à l'autre par leur grande base commune. L'élément supérieur comprend un fond supérieur et un chapeau supérieur. Ce dispositif comprend en second lieu une turbine centrifuge comprenant un moteur et au moins une pale.

Le document EP 0 329 498 décrit un procédé d'activation d'extraction d'air réalisé par un faible débit d'air à moyenne pression soufflé à grande vitesse à travers une buse au centre du conduit collectif d'air extrait dans le sens de l'extraction faisant effet Venturi, la buse étant située près de l'ouverture vers l'extérieur du conduit collectif d'air.

Le document EP 0772 003 décrit un dispositif pour aspirer l'air à travers un conduit principal pour le rejeter à l'extérieur de celui-ci, destiné à des locaux industriels, de travail, d'habitation ou autres, qui comporte un tronçon de conduit en aval du conduit principal et des moyens d'injection d'un gaz d'entraînement dans le tronçon de conduit associés à des moyens de production et d'entraînement dudit gaz d'entraînement écartés en amont de l'extrémité aval du tronçon de conduit.

Le document EP 1 597 523 décrit un procédé et un système de réglage d'un ventilateur d'un système de ventilation d'un bâtiment comprenant en outre un module de commande et un variateur de fréquence agencé pour faire varier la vitesse d'entraînement du ventilateur. Selon ce procédé, on mesure un paramètre d'entrée choisis parmi des paramètres caractéristiques climatiques et/ou d'utilisation du bâtiment, tel que la température extérieure et la vitesse du vent, on transmet la valeur de ce paramètre au module de commande, on détermine par l'intermédiaire d'une programmation préétablie du module de commande une valeur de sortie correspondant au paramètre, on transmet cette valeur de sortie au variateur de fréquence, on détermine la fréquence correspondant à la valeur de sortie, on entraîne le ventilateur à une vitesse fonction de cette fréquence de sorte que l'intensité de la ventilation est adaptée au paramètre d'entrée.

On connaît sur le marché des dispositifs de ventilation stato-mécanique, comme par exemple celui connu sous la marque DYN ASTATO^{®}, destinés à être placés sur le toit du bâtiment concerné. Dans un tel dispositif, l'extracteur statique est équipé d'un dispositif mécanique, à savoir une turbine, qui assiste la ventilation naturelle quand les conditions du tirage naturel ne sont plus réunies ou quand les besoins le requièrent. Cette assistance mécanique est programmée en fonction de l'heure, moyennant une horloge, et de la température extérieure, moyennant une sonde de température, et/ou de la vitesse du vent, moyennant un anémomètre. On connaît également des dispositifs de ventilation naturelle et hybride basse pression assistée par induction d'air, comme par exemple celui connu sous la marque NAVAIR^{®}.

De tels dispositifs de ventilation sont typiquement destinés à l'habitat collectif, un bâtiment donné comportant un ou plusieurs dispositifs de ventilation stato-mécanique avec ou sans induction d'air qui ventilent chacun un ou plusieurs conduits collectifs d'extraction d'air. Le plus souvent, une société assure la maintenance de ces dispositifs de ventilation, ce qui comprend la surveillance du bon fonctionnement, l'entretien préventif de routine, le réglage en cas de besoin, et la réparation de dysfonctionnement, de panne ou de défectuosités. S'agissant de l'habitat collectif, une même société donnée assure la maintenance des dispositifs de ventilation de plusieurs bâtiments proches ou distants les uns des autres.

Une telle maintenance pose de nombreux problèmes. Elle impose non seulement un déplacement sur chaque site où se trouve chaque bâtiment, mais aussi de grimper sur le toit du bâtiment. Elle impose un certain délai. Elle est plus curative que préventive. Elle est donc coûteuse et peu fiable, entraînant des nuisances pour les occupants des logements pouvant être sérieuses en cas de panne stoppant la ventilation du logement et l'arrêt du chauffage et de l'utilisation de l'eau chaude sanitaire.

On pourra mentionner l'existence de systèmes intégrés de climatisation/chauffage tels que décrits dans US 2010/312,396, WO 2008/016,500, US 2007/114,295 ou US 6,643,611. Ces systèmes incluent une commande à distance du chauffage ou du refroidissement. La ventilation n'y est qu'accessoire, et le plus souvent passive. Le domaine d'application de ces systèmes est donc éloigné de celui objet de la présente invention.

L'invention a pour but de remédier à ces problèmes.

Pour résoudre ces problèmes, l'invention comporte un module de système de ventilation de bâtiment pour contrôle et commande à distance via le réseau internet, selon la revendication 1.

Par rapport à l'état de la technique antérieure, les avantages de l'invention sont l'accès à distance aux données de fonctionnement pour l'observation du fonctionnement du dispositif de ventilation. Ainsi, la surveillance du dispositif de ventilation ne se fait pas obligatoirement *in situ.* On assure une observation continue du dispositif de ventilation à distance sans intervention humaine sur le dispositif à surveiller. En outre, des éventuels dysfonctionnements sont détectés dès l'origine et des mesures préventives peuvent être entreprises avant que le dysfonctionnement ne s'aggrave. Ainsi, la présente invention permet un fonctionnement fiable du dispositif de ventilation tout en garantissant des coûts de fonctionnement et de maintenance peu élevés. En l'espèce, la présente invention permet aussi de communiquer à distance une commande au dispositif de ventilation.

Selon une réalisation, en cas de donnée de contrôle en relation avec le fonctionnement du dispositif de ventilation considérée comme significative d'une défectuosité majeure, un portail Internet et/ou un téléphone mobile et/ou un une boîte aux lettres électronique d'une personne chargée du contrôle du système de ventilation est agencé pour recevoir une alerte susceptible d'être envoyée via le réseau internet et/ou le réseau GPRS et/ou le réseau GSM. En d'autres termes, le module comporte des moyens de diagnostic pour déterminer une défectuosité majeure du fonctionnement du dispositif de ventilation et en alerter rapidement un opérateur. Ainsi, le module permet une réactivité dans la gestion des opérations de maintenance du dispositif de ventilation.

Selon une réalisation, le dispositif de ventilation est un dispositif statique, dynamique, stato-dynamique, avec ou sans induction d'air. Ainsi, l'invention s'applique à tous les types de dispositifs de ventilation et peut notamment être mis en oeuvre avec des dispositifs de ventilation déjà existants dans des bâtiments.

Selon une réalisation, le moyen de communication à distance de données, proximal, est un réseau Wi-Fi ou GSM ou GPRS. Ainsi, le moyen de communication à distance assure un accès aux données du dispositif simple à mettre en oeuvre et sans limitation géographique.

Selon une réalisation, le système de ventilation comporte plusieurs dispositifs de ventilation, un automate proximal étant associé à un seul dispositif de ventilation ou à plusieurs dispositifs de ventilation, un automate distal, étant commun à plusieurs automates proximaux, le serveur pouvant être commun à l'ensemble du système de ventilation. Ainsi, il est possible d'obtenir des paramètres de contrôle et/ou de commande pour plusieurs dispositifs de ventilation par exemple et gérer un parc d'installations à distance.

L'invention concerne aussi, selon la revendication 6, un système de ventilation de bâtiment pour contrôle et commande à distance via le réseau internet comportant un module selon la revendication 1.

On assure une observation continue du dispositif de ventilation à distance sans intervention humaine sur le dispositif à surveiller, et des éventuels dysfonctionnements sont détectés dès l'origine et des mesures préventives peuvent être entreprises avant que le dysfonctionnement ne s'aggrave.

Selon une réalisation, le moyen de communication à distance de données, distal, est un réseau Wi-Fi ou GSM ou GPRS. Ainsi, le moyen de communication à distance assure un accès aux données du dispositif simple à mettre en oeuvre et sans limitation géographique.

L'invention concerne aussi, selon la revendication 8, un procédé de contrôle à distance via le réseau internet d'un système de ventilation de bâtiment selon la revendication 6 ou 7.

Grâce à ces dispositions, il est possible d'avoir en temps réel une information sur l'état de fonctionnement du dispositif de ventilation et débuter si nécessaire une opération de maintenance.

Ainsi un système « intelligent » peut permettre par exemple de déterminer l'état de fonctionnement du dispositif de ventilation, diagnostiquer un dysfonctionnement et éventuellement de préconiser une action pour lutter contre ce dysfonctionnement.

Le procédé de contrôle à distance peut comprendre en outre une étape d'enregistrement de la donnée de contrôle.

L'invention concerne aussi, selon la revendication 9, un procédé de contrôle à distance via le réseau internet d'un système de ventilation de bâtiment selon la revendication 8 et un procédé de commande à distance via le réseau internet du système de ventilation de bâtiment.

Grâce à ces dispositions, il est possible de commander à distance les paramètres de fonctionnement du dispositif de ventilation.

Le procédé peut en outre comprendre une étape de réglage et/ou de réparation de dysfonctionnement, de panne ou de défectuosité du dispositif de ventilation. Ainsi, aucun déplacement sur place n'est nécessaire pour effectuer des opérations de maintenance préventive ou curative.

L'invention concerne aussi un produit programme informatique selon la revendication 11.

On décrit maintenant brièvement les figures des dessins.
La figure 1 est une vue schématique des différents composants du système de ventilation avec un module de système de ventilation selon un mode de réalisation de l'invention et un serveur sur un bâtiment.
La figure 2 est une vue schématique des différents éléments du système de ventilation avec un module de système de ventilation et un serveur de la figure 1, et de leurs interactions.
La figure 3a est un diagramme représentant les différentes étapes du procédé de contrôle à distance via le réseau internet d'un système de ventilation selon l'invention.
La figure 3b est un diagramme représentant les différentes étapes du procédé de commande à distance via le réseau internet d'un système de ventilation selon l'invention.
La figure 4a est une vue schématique d'un système de ventilation avec un module de système de ventilation et un serveur tels que représentés sur la figure 2 réalisant les étapes du procédé de contrôle à distance représentées par le diagramme de la figure 3a.
La figure 4b est une vue schématique d'un système de ventilation avec un module de système de ventilation et un serveur tels que représentés sur la figure 2 réalisant les étapes du procédé de commande à distance représentées par le diagramme de la figure 3b.
La figure 5 est une vue schématique d'un système de ventilation avec un module de système de ventilation selon un mode de réalisation de l'invention selon une variante de réalisation de l'invention et un serveur.

Ci-après un exposé détaillé de plusieurs modes de réalisation de l'invention assorti d'exemples et de référence aux dessins.

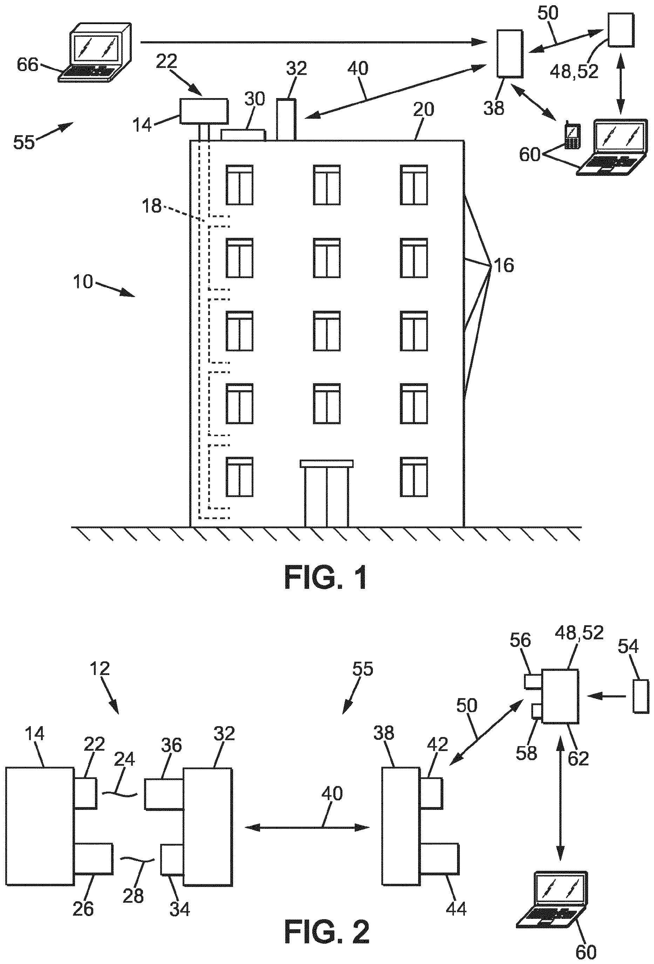

En référence aux figures 1 et 2, le bâtiment 10 est équipé d'un module de système de ventilation 12. Le module de système de ventilation 12 comporte un dispositif de ventilation 14 de bâtiment de type connu destiné à assurer la ventilation naturelle et hybride de différents appartements 16 prévus dans un bâtiment, par exemple. Ainsi, le dispositif de ventilation 14, dans le cas d'un bâtiment 10 d'habitation regroupant une pluralité d'appartements 16 est associé à un conduit d'extraction d'air 18 desservant l'ensemble des appartements 16 et destiné à évacuer un fluide gazeux de l'intérieur des appartements 16 vers l'extérieur du bâtiment 10 par un système de tirage du fluide gazeux. Toutefois, l'invention n'est pas limitée aux bâtiments 10 d'habitation et dans des variantes de réalisation le module de système de ventilation 12 peut être prévu sur tous types de bâtiments, par exemple des bâtiments tertiaires ou industriels.

Le dispositif de ventilation 14 est, dans une première variante un dispositif de ventilation statique. Par exemple, le dispositif de ventilation statique a pour seuls moteurs le tirage thermique (lié à la différence de température entre l'intérieur et l'extérieur du logement) et le vent (tirage éolien). Dans une deuxième variante de réalisation, le dispositif de ventilation est dynamique, à savoir mécanisée et qui maintient en permanence des conditions de tirage particulières. Dans une troisième variante de réalisation, le dispositif de ventilation est stato-dynamique, à savoir un dispositif mécanique vient assister un dispositif statique quand les conditions naturelles de tirage ne sont plus réunies. En outre, le dispositif de ventilation peut être prévu avec ou sans induction d'air.

Toutefois, l'invention n'est pas limitée à la ventilation naturelle et hybride de bâtiments, elle peut être appliquée à tous types d'installations de ventilation. Par exemple, elle peut être appliquée à la ventilation haute, moyenne, basse ou très basse pression, ou encore à l'évacuation des produits de combustion en ventilation mécanique contrôlée.

Le dispositif de ventilation 14 est placé vers la sortie du conduit d'extraction d'air 18 du bâtiment 10. Tel qu'illustré sur la figure 1, le dispositif de ventilation 14 est situé sur le toit 20 du bâtiment 10. En d'autres termes, le dispositif de ventilation 14 est disposé à l'extrémité sommitale du conduit d'extraction d'air 18. Le dispositif de ventilation 14 assure, comme précédemment mentionné, le tirage dans le conduit d'extraction d'air 18 du fluide à évacuer vers l'extérieur du bâtiment 10. Toutefois, dans une variante de réalisation, le module de système de ventilation 12 peut comporter plusieurs dispositifs de ventilation 14.

Un moyen de sortie ou d'émission 22 d'une donnée de contrôle 24 et/ou un moyen d'entrée ou de réception 26 d'une donnée de commande 28 est (sont) associé(s) au dispositif de ventilation 14. En d'autre termes, un organe d'émission de la donnée de contrôle 24 et/ou un organe de réception de la donnée de commande 28 est associé fonctionnellement au dispositif de ventilation 14. Dans une variante de réalisation avec plusieurs dispositifs de ventilation 14, un ou plusieurs moyen(s) avec sortie ou émission 22 d'une donnée de contrôle 24 et/ou un ou plusieurs moyen(s) d'entrée ou de réception 26 d'une donnée de commande 28 est (sont) associé(s) aux dispositifs de ventilation 14.

Le moyen de sortie ou d'émission 22 du dispositif de ventilation 14 (ou plus précisément associé au dispositif de ventilation 14) d'une donnée de contrôle 24 est agencé au voisinage (ou en d'autres termes proche) du dispositif de ventilation 14. Plus précisément, le moyen de sortie ou d'émission 22 va permettre la communication d'une donnée de contrôle 24 en relation directe avec le fonctionnement du dispositif de ventilation 14 vers l'extérieur du dispositif de ventilation 14. Le moyen de sortie ou d'émission 22 peut être filaire et par conséquent être relié au dispositif de ventilation par un câble. Dans une variante, le moyen de sortie ou d'émission 22 est un émetteur sans fil et peut par exemple être relié au dispositif de ventilation 14 par télémétrie, ou toute autre technique d'émission à distance.

La donnée de contrôle 24 peut provenir du dispositif de ventilation 14 directement. En variante, un moyen de détection 30 ou encore un organe de détection, tel qu'un capteur peut être prévu tel qu'illustré sur la figure 1. Le moyen de détection 30 peut être associé au dispositif de ventilation 14, ou encore à l'environnement du dispositif de ventilation 14, comme par exemple être situé en amont ou en aval du dispositif de ventilation 14 et détecter un paramètre, ou encore une donnée représentative ou en relation avec le fonctionnement du dispositif de ventilation qui génère la donnée de contrôle 24.

Selon l'invention, la donnée de contrôle 24 est une donnée représentative de l'état de fonctionnement du dispositif de ventilation 14 et peut être la consommation électrique du dispositif de ventilation 14 dans le cas d'un dispositif dynamique, et/ou le débit de tirage du dispositif de ventilation 14, et/ou la vitesse des moteurs, et/ou une concentration de certains gaz. La donnée de contrôle 24 du dispositif de ventilation 14, ou au moins en relation avec le fonctionnement du dispositif de ventilation 14 peut par exemple prendre des valeurs significatives d'un dysfonctionnement majeur ou d'une défectuosité majeure du dispositif de ventilation 14.

En variante complémentaire ou alternative, la donnée de contrôle 24 peut surveiller le comportement en fonctionnement normal du dispositif de ventilation 14 et par exemple donner une indication sur une optimisation des paramètres de fonctionnement du dispositif de ventilation 14. La donnée de contrôle 24 peut également servir à déterminer le comportement du dispositif de ventilation 14 afin d'en analyser ses réponses. Autrement dit, la donnée de contrôle 24 sera à déterminer en fonction des besoins liés à l'installation sur le bâtiment 10 et à l'environnement du bâtiment 10.

En outre, la donnée de contrôle 24 peut être composée d'une pluralité de « sous-données de contrôles ». En l'espèce plusieurs données de contrôle 24 peuvent être détectés ou émises de façon simultanée ou au contraire de façon consécutive ou séquentielle.

En complément ou en remplacement du moyen avec sortie ou émission 22 du dispositif de ventilation 14, le moyen avec entrée ou réception 26 d'une donnée de commande 28 est associé au dispositif de ventilation 14. Le moyen avec entrée ou réception 26 est agencé au voisinage du dispositif de ventilation 14. En d'autres termes, le moyen avec entrée ou réception 26 est agencé proche du dispositif de ventilation 14.

Le moyen avec entrée ou réception 26 du dispositif de ventilation 14 va permettre au dispositif de ventilation 14 de recevoir une donnée de commande 28 depuis l'extérieur du dispositif de ventilation 14. Le moyen avec entrée ou réception 26 est associé au dispositif de ventilation 14 de façon filaire, ou encore sans fil. Par exemple, le moyen avec entrée ou réception 26 est un récepteur et est associé au dispositif de ventilation 14 par télémétrie.

Le moyen avec entrée ou réception 26 est destiné à recevoir une donnée de commande 28. La donnée de commande 28 apporte une instruction au dispositif de ventilation 14 ou au voisinage du dispositif de ventilation 14 et peut être exécutée comme précisé ci-après. En outre, plusieurs données de commande 28 peuvent être reçues.

Le module de système de ventilation 12 comporte également un automate proximal 32. L'automate proximal 32 est avantageusement agencé ou situé proche ou au voisinage du dispositif de ventilation 14. Par exemple, dans le cas d'un module de système de ventilation 12 de bâtiment 10, l'automate proximal 32 est *in situ,* à savoir dans ou à proximité du bâtiment 10. L'automate proximal 32 est programmé et pourvu d'une mémoire. L'automate proximal 32 est associé au moyen de sortie ou d'émission 22 d'une donnée de contrôle 24 et/ou au moyen d'entrée ou de réception 26 d'une donnée de commande 28. L'automate proximal 32 mémorise la donnée de contrôle 24 et/ou la donnée de commande 28 à envoyer par exemple.

L'automate proximal 32 est associé au moyen de sortie ou d'émission 22 d'une donnée de contrôle 24 et/ou au moyen d'entrée ou de réception 26 d'une donnée de commande 28 par exemple de façon filaire, ou encore de façon sans fil.

L'automate proximal 32 comporte un moyen de sortie ou d'émission de données 34 et/ou un moyen d'entrée ou de réception de données 36. Le moyen de sortie ou d'émission de données 34 est destiné à envoyer la donnée de contrôle 24 et/ou de commande 28, tandis que le moyen avec entrée ou réception de données 36 est destiné à recevoir une donnée de commande 28 et/ou de contrôle 24. La donnée de contrôle 24 et/ou la donnée de commande 28 peut (peuvent) être sensiblement la (les) même(s) que celle(s) émise et/ou reçue par le moyen de sortie ou d'émission 22 du dispositif de ventilation 14 et/ou le moyen d'entrée ou de réception 26 du dispositif de ventilation 14 ou être une donnée post-traitée et/ou prétraitée.

Le moyen de sortie ou d'émission de données 34 de l'automate proximal 32 est par exemple un émetteur adapté pour transmette la donnée de commande 28 au dispositif de ventilation 14, ou encore hors de l'automate proximal 32. La transmission peut se faire à distance, par exemple le moyen de sortie ou d'émission de données 34 peut émettre des signaux par ondes électromagnétiques, ou encore par infrarouge. Dans une variante de réalisation, la transmission est de type filaire.

L'automate proximal 32 comporte, en complément ou en remplacement de son moyen de sortie ou d'émission de données 34, le moyen d'entrée ou de réception de données 36. Le moyen d'entrée ou de réception de données 36 est par exemple un récepteur adapté pour recevoir la donnée de contrôle 24 du dispositif de ventilation 14 envoyée par le moyen de sortie ou d'émission 22 du dispositif de ventilation 14. La réception de la donnée de contrôle 24 est par exemple sans fil. Dans une variante de réalisation, la réception de la donnée de contrôle 24 est réalisée de façon filaire, par exemple par l'intermédiaire d'un câble.

Le module de système de ventilation 12 comporte un automate distal 38. Le module de système de ventilation 12 comporte un moyen de communication à distance de données, proximal, 40 entre l'automate distal 38 et l'automate proximal 32.

Le moyen de communication à distance de données, proximal, 40 (encore appelé ci-après moyen de communication proximal 40) est par exemple un réseau WI-FI ou un réseau GSM ou un réseau GPRS. Le moyen de communication proximal 40 va permettre d'assurer la connexion de données entre l'automate distal 38 et l'automate proximal 32 et/ou entre l'automate proximal 32 et l'automate distal 38. Ainsi, une donnée de contrôle 24 du dispositif de ventilation 14 peut être envoyée par l'automate proximal 32 dans lequel elle a été stockée vers l'automate distal 38 via le moyen de communication proximal 40, par exemple via le réseau WI-FI ou le réseau GSM ou le réseau GPRS.

L'automate distal 38 est situé à distance du dispositif de ventilation 14. Dans le cas d'un système de bâtiments, l'automate distal 38 est par exemple *ex situ,* à savoir hors du bâtiment 10, et par exemple éloigné du bâtiment 10. L'automate distal 38 est par exemple situé dans une plateforme logistique de l'organisme de maintenance du dispositif de ventilation. L'automate distal 38 est programmé. L'automate distal 38 a une mémoire. L'automate distal 38 mémorise la donnée de contrôle 24 et/ou de commande 28 à envoyer ou à transmettre par exemple. L'automate distal 38 est adapté pour recevoir des données via le moyen de communication proximal 40. Par l'intermédiaire le moyen de communication proximal 40, les données de commande 24 et/ou de contrôle 28 peuvent être envoyées à intervalles réguliers et mémorisée dans l'automate distal et/ou proximal les recevant.

L'automate distal 38 comporte en outre un moyen de sortie ou d'émission de données 42 et/ou un moyen d'entrée ou de réception de données 44.

Le moyen de sortie ou d'émission de données 42 de l'automate distal 38 peut émettre sans fil, avec par exemple des signaux par ondes électromagnétiques, ou encore par infrarouge. Dans une variante de réalisation, le moyen de sortie ou d'émission de données 42 de l'automate distal 38 est filaire.

En complément ou en remplacement du moyen de sortie ou d'émission de données 42, le moyen d'entrée ou de réception de données 44 est associé à l'automate distal 38. Le moyen d'entrée ou de réception de données 44 de l'automate distal 38 est par exemple un récepteur adapté pour recevoir la donnée de commande 28 et/ou de contrôle 24 à distance. Dans une variante de réalisation, le moyen d'entrée ou de réception de données 44 reçoit la donnée de commande 28 et/ou de contrôle à distance 24 par une transmission filaire.

Ainsi, le module de système de ventilation 12 comporte le dispositif de ventilation 14, l'automate proximal 32, l'automate distal 38, le moyen de communication à distance, proximal, 40 et éventuellement le moyen de détection 30.

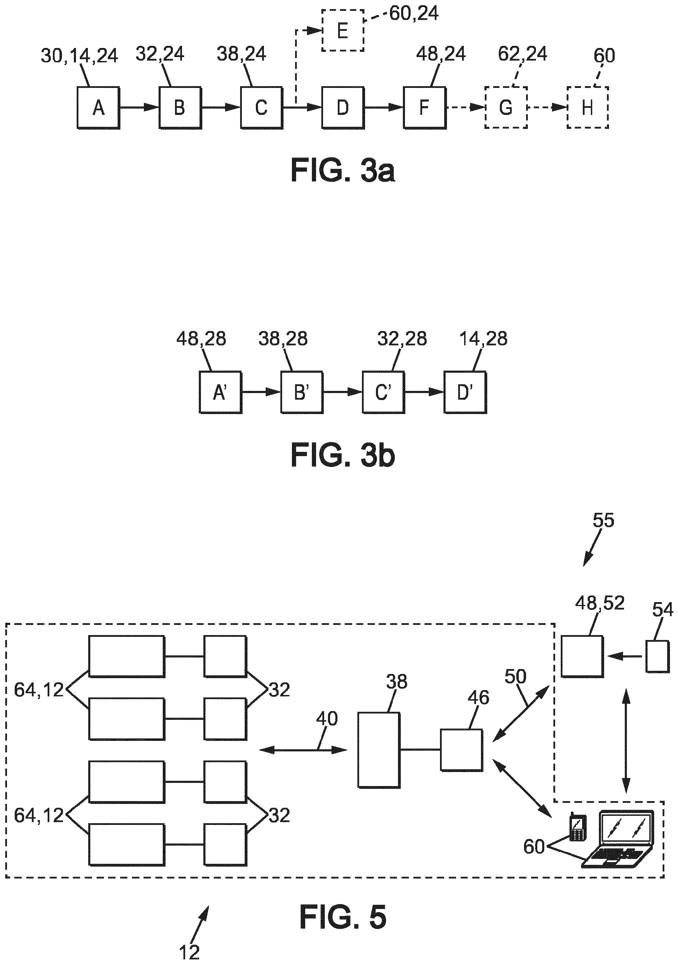

Dans une variante de réalisation, l'automate distal 38 est équipé d'un modem 46 (cf. figure 5). L'automate distal 38, éventuellement par l'intermédiaire de son modem 46, est adapté pour envoyer une donnée de contrôle 24 ou pour recevoir une donnée de commande 28 à ou venant d'un serveur 48.

L'envoi des données entre le serveur 48 et l'automate distal 38 et/ou entre l'automate distal 38 et le serveur 48 est réalisé à distance via un moyen de communication à distance de données, distal 50 (encore appelé moyen de communication distal 50). Le moyen de communication distal 50 est par exemple un réseau GSM ou WI-FI ou GPRS.

Le serveur 48 est un élément du système de ventilation 12. Le serveur 48 est adapté pour mémoriser une pluralité de données de commande 28 et/ou de contrôle 24. Les données, notamment les données de contrôle 24 sont ensuite consultables par l'intermédiaire d'un portail internet 52 et permette de suivre le comportement du dispositif de ventilation 12. En d'autres termes, le serveur 48 comporte un portail internet 52 accessible depuis un terminal internet 54. En outre, le serveur 48 comporte un moyen de sortie ou d'émission de donnée 56 et/ou un moyen d'entrée ou de réception de données 58.

L'ensemble comprenant le serveur 48 avec portail Internet 52 consultable depuis un terminal Internet 54, le moyen de communication à distance de données, distal 50 et le module de système de ventilation 12 forme le système de ventilation 55.

En variante, le modem 46 associé à l'automate distal 38, ou un moyen d'émission 42 de l'automate distal 38 envoi une donnée de contrôle 24 à un organe de communication intelligent personnel 60, tel qu'un ordinateur portable ou un téléphone portable d'un opérateur, par exemple d'un opérateur de maintenance en charge de surveiller le comportement du dispositif de ventilation 14, ou en charge de surveiller une anomalie de fonctionnement du dispositif de ventilation 14.

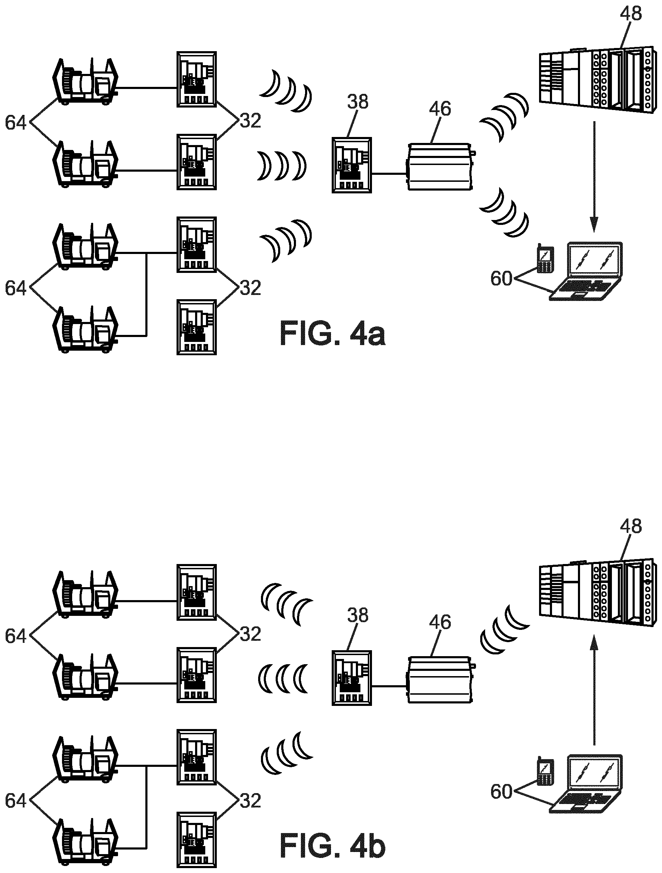

Les figures 3a et 4a illustrent le procédé de contrôle à distance d'un système de ventilation 12 de bâtiment 10 tel que représenté figure 2. Le procédé de contrôle à distance, ou encore le procédé de « surveillance » à distance se décompose en plusieurs étapes, telles que représentées sur la figure 3a.

Tout d'abord, à l'étape A, le détecteur 30 ou encore des capteurs mesurent une ou plusieurs données de fonctionnement (encore appelées donnée(s) de contrôle 24) du dispositif de ventilation 14. Il peut être prévu de mesurer la ou les données de contrôle 24 de façon continue ou d'effectuer la mesure à intervalle de temps régulier prédéterminer, ou encore sur commande d'un opérateur.

Dans une autre variante de réalisation on peut prévoir un capteur mesurant en continu mais adapté pour déclencher la transmission de la donnée de contrôle 24 une fois qu'un seuil maximal ou minimal préalablement défini est atteint.

A l'étape B, la ou les donnée(s) de contrôle 24 est (sont) transmise(s) à un automate proximal 32 via le moyen de sortie ou d'émission 22 du dispositif de ventilation 14 (plus précisément, via le moyen de sortie ou d'émission 22 associé au dispositif de ventilation 14). En l'espèce, la donnée de contrôle 24 est reçue par le moyen d'entrée ou de réception de donnée 36 de l'automate proximal 32. L'automate proximal 32 enregistre la donnée de contrôle 24. Eventuellement, l'automate proximal est adapté pour modifier et/ou traiter la donnée de contrôle 24.

La donnée de contrôle 24 est transmise de l'automate proximal 32 à l'automate distal 38 via le moyen de communication proximal 40, par exemple par réseau WI-FI ou GSM ou GPRS (étape C). La donnée de contrôle 24 est par exemple, transmise d'un moyen d'émission de données 34 de l'automate proximal 32 à un moyen de réception de données 44 de l'automate distal 38.

L'automate distal 38 transmet la donnée de contrôle 24 au serveur 48 par le moyen de communication distal 50, par exemple par réseau WI-FI ou GSM ou GPRS (étape D). Alternativement ou de façon complémentaire, la donnée de contrôle 24 est transmise par exemple par l'intermédiaire du modem 46 associé à l'automate distal 38 à un organe de communication intelligent personnel 60 d'un opérateur de maintenance, par exemple un courriel et/ou un message texte est envoyé sur l'ordinateur portable ou sur le téléphone portable d'un opérateur (étape E).

Les données de contrôle 24 sont au fur et à mesure et en temps réel stockées et mises en ligne ou mises à disposition du personnel compétent via le serveur 48 comprenant le portail internet 52 accessible depuis le terminal internet 54 (étape F).

Le procédé de contrôle à distance comporte également, selon l'invention, une étape de diagnostic par un outil de diagnostic 62 d'un état de fonctionnement incorrect du dispositif de ventilation 14 (étape G). Eventuellement une étape de transmission du diagnostic à un opérateur peut avoir lieue (Etape H).

Les figures 3b et 4b illustrent le procédé de commande à distance du système de ventilation 14. Le procédé de commande à distance peut éventuellement être mis en oeuvre parallèlement et en dépendance avec procédé de contrôle à distance, ou encore être mis en oeuvre indépendamment du procédé de contrôle. Il en est de même pour le procédé de contrôle qui peut être mis en oeuvre avec ou indépendamment du procédé de commande. Le procédé de contrôle à distance se décompose en plusieurs étapes, telles que représentées sur la figure 3b.

Tout d'abord, à l'étape A' des paramètres de régulation du dispositif de ventilation 14 sont modifiés. Par exemple, un opérateur entre de nouveaux paramètres ou encore, un logiciel vient modifier de façon autonome les paramètres de régulation du dispositif de ventilation 14. La modification des paramètres peuvent avoir plusieurs origines, par exemple elle peut être due et dépendante de la donnée de contrôle 24 préalablement mesurée, ou encore elle peut être dépendante de paramètres extérieurs environnementaux tels que la force du vent ou encore la température. Les paramètres de régulation du dispositif de ventilation 14 sont modifiés via un terminal internet 54 et mémorisé par le serveur 48. Les paramètres de régulation du dispositif de ventilation 14 modifiés génèrent une ou plusieurs donnée(s) de commande 28.

A l'étape B', l'automate distal 38 reçoit la donnée de commande 28. L'automate distal 38 enregistre la donnée de commande 28. L'automate distal 38 reçoit la donnée de commande 28 via le moyen de communication distal 50.

A l'étape C', l'automate proximal 32 reçoit la donnée de commande 28 de l'automate proximal 38 par le moyen de communication proximal 40. L'automate proximal 32 enregistre la donnée de commande 28.

L'automate proximal 32 envoie la donnée de commande 28 au dispositif de ventilation 14, ou à un organe adapté pour agir sur le dispositif de ventilation 14 ou sur les paramètres du dispositif de ventilation 14 et pour commander le changement d'état désiré du dispositif de ventilation 14 (étape D'). Ainsi, par exemple l'automate proximal 38 va commander la régulation de la vitesse d'une soufflante 64 (cf. figure 4b) en contrôlant sa consommation électrique dans le cas d'un dispositif de ventilation 14 naturelle assistée par induction d'air.

On assure ainsi à distance une modification du fonctionnement du dispositif de ventilation 14 en modifiant à distance des paramètres de régulation du dispositif.

Les réceptions et émissions de la donnée de commande 28 par les différents éléments composant le système de ventilation 12 (le dispositif de ventilation 14, l'automate proximal 32, l'automate distal 38, le serveur 48) peuvent transiter par des moyens de réception ou entrée 26, 36, 44, 58 et/ou des moyens d'émission ou sortie 22, 34, 42, 56 associés à chaque éléments par exemple.

Dans des variantes de réalisation, un automate proximal 32 peut être associé à plusieurs dispositifs de ventilation 14 ou encore à plusieurs soufflantes 64, par exemple un automate proximal 32 peut être associé à quatre soufflantes 64, ou encore dix soufflantes 64. Le nombre de soufflantes 64 auquel l'automate proximal 32 est relié déterminera le type d'automate proximal 32 utilisé. Toutefois, éventuellement un automate proximal 32 peut être associé à un seul dispositif de ventilation 14, et plusieurs ensembles comprenant un dispositif de ventilation 14 et un automate proximal 32 peuvent être prévus et être commandé par l'intermédiaire d'un seul et même serveur 48, comme illustré sur la figure 5.

Un seul automate distal 38 peut être associé à plusieurs automates proximaux 32 et à un seul serveur 48, comme illustré sur la figure 5. Les données sont alors toutes regroupées et enregistrées au même endroit.

La donnée de commande 28 peut être la même pour l'ensemble des dispositifs de ventilation 14. La donnée de commande 28 peut être différentes selon le dispositif de ventilations 14. Le paramètre mesuré sur les dispositifs de ventilation 14 donnant naissance aux données de contrôle 24 peut être différent selon les dispositifs de ventilation ou être le même.

Un processeur 66 peut en outre être prévu pour exécuter un produit programme informatique mettant en oeuvre les étapes A, B, C, D, E et/ou F du procédé de contrôle à distance via le réseau internet du système de ventilation 55 de bâtiment 10, et/ou exécuter les étapes A', B', C' et/ou D' du procédé de commande à distance via le réseau internet du système de ventilation 55 de bâtiment 10.

Ainsi, il sera possible de télé-surveiller des dispositifs de ventilation 14, ou encore des parcs comprenant une pluralité de dispositifs de ventilation 14. Le système de ventilation permet une mise en mémoire en temps réel d'informations de surveillance des installations. Les informations relevées sont susceptibles d'être consultées en temps réel par la maitrise d'ouvrage du bâtiment via une interface internet.

Un diagnostic d'une panne éventuelle peut être réalisé par un outil de diagnostic 62 et une alerte peut être envoyée à l'opérateur de maintenance par exemple. En outre, le système de ventilation 55 assure également un diagnostic de la qualité du dispositif de ventilation 14 en temps réel et sur une période donnée, par exemple en comparant l'évolution de certains paramètres ou variables locales avec des courbes type d'évolution données.

Le système de ventilation 55 permet de suivre les opérations de maintenance, d'afficher plusieurs paramètres de fonctionnement et ainsi assure un suivi de l'opération de maintenance. Par exemple, tout opération de maintenance réalisée sera signalée et enregistrée dans le système de ventilation 55. En outre, le système de ventilation 55 permet un pointage du technicien de maintenance en charge par l'intermédiaire d'une interface homme machine sur site et/ou d'un terminal Internet et/ou d'un téléphone mobile.

Les pannes du dispositif de ventilation 14 sont réduites et les délais d'intervention également.

En outre, le système de ventilation 55 permet de prioriser les opérations de maintenance. Le système de ventilation 55 permet également de développer les plans de maintenance sur la base d'analyses *in situ* précises des dispositifs de ventilation 14 sans déplacement d'une équipe de maintenance.

Comme décrit ci-dessus, le système permet d'obtenir de manière centralisée des données de contrôle en relation avec le fonctionnement de dispositifs de ventilation, et/ou d'émettre de manière centralisée des données de commande en relation avec le fonctionnement de dispositifs de ventilation. On peut par exemple mettre en oeuvre un système d'adressage par lequel chaque objet communiquant du réseau est identifié par un identifiant unique. Ainsi, la relation entre la donnée de contrôle et/ou de commande avec chaque dispositif de ventilation se fait via l'identifiant unique. Ainsi, la donnée de contrôle en relation avec le fonctionnement du dispositif de ventilation comprend à la fois l'information elle-même et l'identifiant unique du dispositif de ventilation. La donnée de commande en relation avec le fonctionnement du dispositif de ventilation comprend à la fois l'information elle-même et l'identifiant unique du dispositif de ventilation.

Le serveur 48 (ou un autre composant connecté du réseau) peut stocker une cartographie de correspondance entre l'identifiant unique de chaque appareil et la position géographique de celui-ci. Ainsi, si le serveur 48 reçoit une information relative à un dispositif de ventilation donné, par l'intermédiaire d'un automate proximal et d'un automate distal donnés, la cartographie permet d'identifier l'emplacement géographique du dispositif de ventilation en question en vue d'une intervention ou d'une maintenance par exemple.

Les objets communiquants du système peuvent par exemple se voir affecter un identifiant unique de manière séquentielle. Par exemple, chaque dispositif de ventilation se voit affecter respectivement un identifiant de 1 à I, chaque automate proximal un identifiant de l+1 à m, chaque automate distal un identifiant de m+1 à n. Si le serveur 48 reçoit une information relative au dispositif de ventilation k, k étant compris entre 1 et l, par l'intermédiaire d'un automate proximal et d'un automate distal donnés, la cartographie permet d'identifier l'emplacement géographique du dispositif de ventilation k en vue d'une intervention ou d'une maintenance par exemple.

En alternative, si le serveur 48 émet une commande en direction du dispositif de ventilation k, celle-ci est relayée jusqu'à ce dernier par l'intermédiaire des automates proximal et distal qui lui sont associés. Ainsi, chaque automate proximal et/ou distal peut stocker l'information relative aux dispositifs de ventilation qu'il dessert, et décider de transmettre ou non l'information en aval seulement si elle peut atteindre le dispositif de ventilation k par ce biais.

En particulier, l'automate distal peut ne pas connaître tous les dispositifs de ventilation qu'il dessert. Il enverra d'abord une requête aux automates proximaux auxquels il est connecté pour leur demander si l'un d'entre eux connait le dispositif de ventilation en question. Il ne transmettra la donnée qu'à l'automate proximal l'informant pouvoir la délivrer au dispositif de ventilation k.

De manière pratique, le serveur 48 peut émettre une commande en direction de l'ensemble des dispositifs de ventilation desservis par un automate proximal donné. Il suffit que la donnée de commande soit associée à l'identifiant unique d'un automate proximal donné, et celui-ci, à réception de la donnée, transmettra à l'ensemble des dispositifs qu'il dessert. Cette description peut également s'appliquer aux automates distaux.

En variante, on n'utilisera pas nécessairement un adressage séquentiel. On peut utiliser un adressage hiérarchique. Par exemple, chaque dispositif de ventilation comprend une identification unique sous le format X.Y.Z, où Z désigne l'identifiant unique des automates distaux (par exemple de 1 à n1), Y désigne l'identifiant unique des automates proximaux (par exemple de 1 à n2, n2 variant d'un automate distal à l'autre) pour chaque automate distal, et X désigne l'identifiant unique de chaque dispositif de ventilation (par exemple de 1 à n3, n3 variant d'un automate proximal à l'autre) pour chaque automate proximal. Une telle construction hiérarchique facilite l'intégration de nouveaux conduits d'extraction d'air, bâtiments ou ensemble de bâtiments dans le système, car il suffit d'incrémenter les bornes maximales n1, n2, n3.

De cette manière, le serveur 48 reçoit une donnée de contrôle en relation avec le dispositif de ventilation k1.k2.k3 pour le k1-ème dispositif de ventilation desservi parle k2-ème automate proximal desservi par le k3-ème automate distal. Le dispositif de ventilation peut déjà connaitre les valeurs de k1, k2 et k3 le concernant, et génère la donnée de commande comportant l'adresse complète. En variante, l'adresse est générée de manière cumulative lors de la transmission de la donnée depuis le dispositif de ventilation vers le serveur 48. Ainsi, le dispositif de ventilation transmet à l'automate proximal une donnée associée à l'identifiant k1. Puis l'automate proximal y concatène la valeur k2, et transmet à l'automate distal une donnée associée à l'adresse k1.k2, et ainsi de suite.

Selon cette hiérarchie, l'émission de donnée de commande en direction d'un dispositif de ventilation peut se faire en limitant les communications, car l'adresse porte l'information quant à la séquence d'objets communiquants par qui passer pour atteindre le dispositif de ventilation concerné par la commande. Un code particulier, par exemple 0, peut être utilisé dans l'adresse pour désigner tous les objets communiquant en aval d'un objet communiquant donné.

Le mode de réalisation hiérarchique qui vient d'être décrit n'est qu'un exemple. Par exemple, il pourrait comporter 4 niveaux ou plus, et non pas trois comme décrit ci-dessus, selon la complexité et la structure des systèmes à adresser. En variante, il pourrait ne comporter que deux niveaux, notamment dans le cas où chaque automate proximal correspond à un unique dispositif de ventilation.

## Revendications

1. Module de système de ventilation (12) de bâtiment (10) pour contrôle et commande à distance via le réseau internet :
▪ comprenant :
∘ au moins un dispositif de ventilation (14) apte et destiné à être placé vers la sortie sommitale d'un conduit d'extraction d'air (18) du bâtiment (10), auquel est associé fonctionnellement un moyen avec sortie ou émission (22) d'une donnée de contrôle (24) en relation avec le fonctionnement du dispositif de ventilation (14), et provenant du dispositif de ventilation (14) lui-même, ou d'un moyen de détection (30) associé au dispositif de ventilation (14), ou de l'environnement du dispositif de ventilation (14), et un moyen avec entrée ou réception d'une donnée de commande (28) en relation avec le fonctionnement du dispositif de ventilation (14), et allant au dispositif de ventilation (14), le moyen avec sortie ou émission et/ou le moyen avec entrée ou réception étant proximal,
∘ un automate proximal (32), programmé et pourvu d'une mémoire, associé au moyen avec sortie ou émission (22) et au moyen avec entrée ou réception, ledit automate proximal (32) étant avec moyen de sortie ou d'émission (34) de donnée et moyen d'entrée ou de réception de donnée (36),
∘ un automate distal (38), programmé et pourvu d'une mémoire, avec moyen de sortie ou d'émission (42) de donnée et moyen d'entrée ou de réception (44) de donnée,
∘ un moyen de communication à distance de données, proximal (40), entre l'automate proximal (32) et l'automate distal (38) et entre l'automate distal (38) et l'automate proximal (32),
∘ un outil de diagnostic (62) adapté pour réaliser un diagnostic d'un état de fonctionnement incorrect du dispositif de ventilation (14) à partir de la donnée de contrôle (24) en relation avec le fonctionnement du dispositif de ventilation,
▪ tel que :
∘ une donnée pour le contrôle du fonctionnement du dispositif de ventilation (14) peut être communiquée du moyen avec sortie ou émission (22) d'une donnée de contrôle (24) associé au dispositif de ventilation (14) via l'automate proximal (32) puis l'automate distal (38), et la donnée pour le contrôle du fonctionnement du dispositif de ventilation (14) est susceptible d'être reçue et communiquée via le réseau internet d'un serveur (48) distant par un portail internet (52) accessible depuis un terminal internet (54) de sorte à pouvoir contrôler à distance le fonctionnement du dispositif de ventilation (14) depuis le terminal internet (54) et le portail internet (52) dudit serveur (48) distant, ladite donnée de contrôle (24) étant une donnée représentative de l'état de fonctionnement du dispositif de ventilation (14) parmi la consommation électrique du dispositif de ventilation dans le cas d'un dispositif dynamique, le débit de tirage du dispositif de ventilation, la vitesse des moteurs, une concentration de gaz, la donnée de contrôle (24) pouvant prendre des valeurs significatives d'un dysfonctionnement majeur ou d'une défectuosité majeure du dispositif de ventilation, et
∘ une donnée pour la commande du fonctionnement du dispositif de ventilation (14) peut être communiquée au dispositif de ventilation (14), via l'automate distal (38) puis l'automate proximal (32), et est susceptible d'être envoyée via le réseau internet d'un serveur (48) distant à partir d'un terminal internet (54) et d'un portail internet (52),
∘ ledit outil de diagnostic (62) est apte à envoyer une alerte à un opérateur de maintenance.

2. Module de système de ventilation (12) de bâtiment (10) pour contrôle et commande à distance via le réseau internet selon la revendication 1, tel qu'en cas de donnée de contrôle (24) en relation avec le fonctionnement du dispositif de ventilation (14) considérée comme significative d'une défectuosité majeure, un portail internet (52) et/ou un téléphone mobile (60) et/ou une boite aux lettres électronique d'une personne chargée du contrôle du dispositif de ventilation (14) est agencé pour recevoir une alerte susceptible d'être envoyée via le réseau internet ou GSM ou GPRS.

3. Module de système de ventilation (12) de bâtiment (10) pour contrôle et commande à distance via le réseau internet selon l'une quelconque des revendications 1 et 2, dans lequel un dispositif de ventilation (14) est un dispositif statique, dynamique, stato-dynamique, avec ou sans induction d'air.

4. Module de système de ventilation (12) de bâtiment (10) pour contrôle et commande à distance via le réseau internet selon l'une quelconque des revendications 1 à 3, dans lequel le moyen de communication à distance de données, proximal (40), est un réseau Wi-Fi ou GSM ou GPRS.

5. Module de système de ventilation (12) de bâtiment (10) pour contrôle et commande à distance via le réseau internet selon l'une quelconque des revendications 1 à 4, qui comporte plusieurs dispositifs de ventilation, un automate proximal étant associé à un seul dispositif de ventilation ou à plusieurs dispositifs de ventilation, un automate distal, étant commun à plusieurs automates proximaux.

6. Système de ventilation (55) de bâtiment (10) pour contrôle et commande à distance via le réseau internet comportant un module de système de ventilation (12) de bâtiment (10) pour contrôle et commande à distance via le réseau internet selon l'une quelconque des revendications 1 à 5 et :
∘ un serveur (48) ayant un portail internet (52) accessible depuis un terminal internet, avec moyen de sortie ou d'émission de donnée et moyen d'entrée ou de réception de donnée,
∘ un moyen de communication à distance de données, distal (50), entre l'automate distal et le serveur et entre le serveur (48) et l'automate distal (50),
tel que
∘ une donnée pour le contrôle du fonctionnement du dispositif de ventilation (14) peut être communiquée du moyen avec sortie ou émission (22) d'une donnée de contrôle (24) associé au dispositif de ventilation au serveur, via l'automate proximal (32) puis l'automate distal (38), de sorte à pouvoir contrôler à distance le fonctionnement du dispositif de ventilation (12) depuis le terminal internet (54) et le portail internet (52), et
∘ une donnée pour la commande du fonctionnement du dispositif de ventilation (14) peut être communiquée au dispositif de ventilation (14) à partir du terminal internet et du portail internet, via le serveur (48), l'automate distal (38) puis l'automate proximal (32).

7. Système de ventilation (55) de bâtiment (10) pour contrôle et commande à distance via le réseau internet selon la revendication 6, dans lequel le moyen de communication à distance de données, distal (50), est un réseau Wi-Fi ou GSM ou GPRS.

8. Procédé de contrôle à distance via le réseau internet d'un système de ventilation (55) de bâtiment (10) selon la revendication 6 ou 7 qui comprend au moins les étapes :
- prévoir un dispositif de ventilation (14), auquel est associé fonctionnellement un moyen avec sortie ou émission (22) d'une donnée de contrôle (24) en relation avec le fonctionnement du dispositif de ventilation, et provenant du dispositif de ventilation (14) lui-même, ou d'un moyen de détection (30) associé au dispositif de ventilation, ou de l'environnement du dispositif de ventilation (14),
- mesurer, détecter et/ou collecter une donnée de contrôle (24) en relation avec le fonctionnement du dispositif de ventilation (14) parmi la consommation électrique du dispositif de ventilation dans le cas d'un dispositif dynamique, le débit de tirage du dispositif de ventilation, la vitesse des moteurs, une concentration de gaz, la donnée de contrôle (24) pouvant prendre des valeurs significatives d'un dysfonctionnement majeur ou d'une défectuosité majeure du dispositif de ventilation,
- transmettre la donnée de contrôle (24) en relation avec le fonctionnement du dispositif de ventilation (14) du moyen avec sortie ou émission (22) d'une donnée de contrôle (24) du dispositif de ventilation à un moyen d'entrée ou de réception (36) de donnée d'un automate proximal (32),
- transmettre la donnée de contrôle (24) en relation avec le fonctionnement du dispositif de ventilation (14) d'un moyen de sortie ou d'émission (34) de donnée de l'automate proximal (32) à un moyen d'entrée ou de réception (44) de donnée d'un automate distal via un moyen de communication à distance de données, proximal (40),
- transmettre la donnée de contrôle (24) en relation avec le fonctionnement du dispositif de ventilation d'un moyen de sortie ou d'émission de donnée (42) de l'automate distal (38) à un serveur (48) via un moyen de communication à distance de données, distal (50),
- transmettre la donnée de contrôle (24) en relation avec le fonctionnement du dispositif de ventilation (14) du serveur à un portail internet (52) et/ ou sur un téléphone mobile intelligent (60)
- diagnostiquer un état de fonctionnement du dispositif de ventilation (14) à partir de la donnée de contrôle (24) en relation avec le fonctionnement du dispositif de ventilation par un outil de diagnostic.

9. Procédé de contrôle à distance via le réseau internet d'un système de ventilation (55) de bâtiment (10) selon la revendication précédente et procédé de commande à distance via le réseau internet du système de ventilation (55) de bâtiment (10), le dispositif de ventilation (14) étant apte et destiné à être placé vers la partie sommitale d'un conduit d'extraction d'air, auquel est associé fonctionnellement un moyen avec entrée ou réception (26) d'une donnée de commande (28) en relation avec le fonctionnement du dispositif de ventilation (14), le procédé de commande à distance via le réseau internet du système de ventilation (55) de bâtiment (10) comprenant au moins les étapes :
- prévoir un portail internet (52) et un serveur (48),
- transmettre une donnée pour la commande du serveur (48) à un moyen d'entrée ou de réception (44) de donnée d'un automate distal (38) par l'intermédiaire d'un moyen de communication à distance de données, distal (50),
- transmettre la donnée d'un moyen de sortie ou d'émission (42) de donnée de l'automate distal (38) vers un moyen d'entrée ou de réception (36) de donnée d'un automate proximal (32) via un moyen de communication à distance de données, proximal (40),
- transmettre la donnée de commande (28) d'un moyen de sortie ou d'émission (34) de donnée de l'automate proximal (32) vers un moyen d'entrée ou de réception (26) de donnée du dispositif de ventilation (14).

10. Procédé de contrôle à distance via le réseau internet d'un système de ventilation (55) de bâtiment (10) et procédé de commande à distance via le réseau internet du système de ventilation (55) de bâtiment (10) selon la revendication précédente, le procédé de commande à distance via le réseau internet du système de ventilation (55) de bâtiment (10) comprenant en outre une étape de réglage et/ou de réparation de dysfonctionnement, de panne ou de défectuosité du dispositif de ventilation (14).

11. Produit programme informatique comprenant des instructions pour mettre en oeuvre le procédé de contrôle à distance via le réseau internet d'un système de ventilation (55) de bâtiment (10) selon la revendication 8, ou le procédé de contrôle à distance via le réseau internet d'un système de ventilation (55) de bâtiment (10) et le procédé de commande à distance via le réseau internet du système de ventilation (55) de bâtiment (10) selon la revendication 9 ou 10 , lors d'une exécution de ce programme par un processeur (66).

## Patentansprüche

1. Modul für ein Lüftungssystem (12) eines Gebäudes (10) zur Fernüberwachung und Fernsteuerung über das Internetnetzwerk,
umfassend:
∘ wenigstens eine Lüftungsvorrichtung (14), die dafür geeignet und dazu bestimmt ist, in Richtung des Scheitelausgangs eines Luftabzugskanals (18) des Gebäudes (10) angeordnet zu werden, der betriebsmäßig ein Mittel mit Ausgang oder Ausgabe (22) von Überwachungsdaten (24) in Zusammenhang mit dem Betrieb der Lüftungsvorrichtung (14) zugeordnet ist, die von der Lüftungsvorrichtung (14) selbst stammen, oder von einem Erfassungsmittel (30) stammen, das der Lüftungsvorrichtung (14) zugeordnet ist, oder aus der Umgebung der Lüftungsvorrichtung (14) stammen, und ein Mittel mit Eingabe oder Empfang von Überwachungsdaten (28) in Zusammenhang mit dem Betrieb der Lüftungsvorrichtung (14), die zu der Lüftungsvorrichtung (14) fließen, wobei das Mittel mit Ausgang oder Ausgabe und/oder das Mittel mit Eingabe oder Empfang proximal ist,
∘ einen proximalen Automaten (32), der programmiert und mit einem Speicher versehen ist, der dem Mittel mit Ausgang oder Ausgabe (22) und dem Mittel mit Eingabe oder Empfang zugeordnet ist, wobei der proximale Automat (32) mit einem Mittel für Ausgang oder Ausgabe (34) von Daten und einem Mittel für Eingabe oder Empfang von Daten (36) versehen ist,
∘ einen distalen Automaten (38), der programmiert und mit einem Speicher versehen ist, mit einem Mittel für Ausgang oder Ausgabe (42) von Daten und einem Mittel für Eingabe oder Empfang (44) von Daten,
∘ ein Mittel zur Datenfernübermittlung, proximal (40), zwischen dem proximalen Automaten (32) und dem distalen Automaten (38) sowie zwischen dem distalen Automaten (38) und dem proximalen Automaten (32),
∘ ein Diagnosewerkzeug (62), das dazu ausgebildet ist, eine Diagnose eines fehlerhaften Betriebszustands der Lüftungsvorrichtung (14) anhand der Überwachungsdaten (24) in Zusammenhang mit dem Betrieb der Lüftungsvorrichtung auszuführen,
so dass:
o Daten zur Kontrolle des Betriebs der Lüftungsvorrichtung (14) von dem Mittel mit Ausgang oder Ausgabe (22) von Überwachungsdaten (24), das der Lüftungsvorrichtung (14) zugeordnet ist, über den proximalen Automaten (32) und dann den distalen Automaten (38) übermittelt werden können, und die Daten zur Steuerung des Betriebs der Lüftungsvorrichtung (14) über das Internetnetzwerk eines entfernten Servers (48) durch ein Internetportal (52), das von einem Internetterminal (54) aus zugänglich ist, empfangen und übermittelt werden können, so dass der Betrieb der Lüftungsvorrichtung (14) von dem Internetterminal (54) und dem Internetportal (52) des entfernten Servers (48) aus ferngesteuert werden kann, wobei die Überwachungsdaten (24) Daten sind, die für den Betriebszustand der Lüftungsvorrichtung (14) repräsentativ sind, darunter der Stromverbrauch der Lüftungsvorrichtung im Fall einer dynamischen Vorrichtung, das Zugvolumen der Lüftungsvorrichtung, die Geschwindigkeit der Motoren, eine Gaskonzentration, wobei die Überwachungsdaten (24) Werte annehmen können, die eine größere Fehlfunktion oder einen größeren Defekt der Lüftungsvorrichtung anzeigen, und
o Daten zur Steuerung des Betriebs der Lüftungsvorrichtung (14), die über den distalen Automaten (38) und dann den proximalen Automaten (32) an die Lüftungsvorrichtung (14) übermittelt werden können und über das Internetnetzwerk eines entfernten Servers (48) von einem Internetterminal (54) und einem Internetportal (52) gesendet werden können,
o das Diagnosewerkzeug (62) dazu geeignet ist, einen Alarm an einen Wartungstechniker zu senden.

2. Modul für ein Lüftungssystem (12) eines Gebäudes (10) zur Fernüberwachung und Fernsteuerung über das Internetnetzwerk nach Anspruch 1, derart, dass im Falle von Überwachungsdaten (24) in Zusammenhang mit dem Betrieb der Lüftungsvorrichtung (14), die einen größeren Defekt anzeigen, ein Internetportal (52) und/oder ein Mobiltelefon (60) und/oder eine Mailbox einer mit der Überwachung der Lüftungsvorrichtung (14) beauftragten Person eingerichtet ist, um einen Alarm zu empfangen, der über das Internetnetzwerk oder GSM oder GPRS versendet werden kann.

3. Modul für ein Lüftungssystem (12) eines Gebäudes (10) zur Fernüberwachung und Fernsteuerung über das Internetnetzwerk nach einem der Ansprüche 1 und 2, wobei eine Lüftungsvorrichtung (14) eine statische, dynamische oder statodynamische Vorrichtung, mit oder ohne Luftinduktion ist.

4. Modul für ein Lüftungssystem (12) eines Gebäudes (10) zur Fernüberwachung und Fernsteuerung über das Internetnetzwerk nach einem der Ansprüche 1 bis 3, wobei das Mittel zur Datenfernübermittlung, proximal (40), ein WLAN- oder GSM- oder GPRS-Netzwerk ist.

5. Modul für ein Lüftungssystem (12) eines Gebäudes (10) zur Fernüberwachung und Fernsteuerung über das Internetnetzwerk nach einem der Ansprüche 1 bis 4, das mehrere Lüftungsvorrichtungen umfasst, wobei ein proximaler Automat einer einzelnen Lüftungsvorrichtung oder mehreren Lüftungsvorrichtungen zugeordnet ist, wobei ein distaler Automat, mehreren proximalen Automaten gemeinsam ist.

6. Lüftungssystem (55) für ein Gebäude (10) zur Fernüberwachung und Fernsteuerung über das Internetnetzwerk, umfassend ein Modul für ein Lüftungssystems (12) eines Gebäudes (10) zur Fernüberwachung und Fernsteuerung über das Internetnetzwerk nach einem der Ansprüche 1 bis 5 und:
∘ einen Server (48) mit einem Internetportal (52), das von einem Internetterminal aus zugänglich ist, mit einem Mittel für Ausgabe oder Ausgang von Daten und einem Mittel für Eingabe oder Empfang von Daten,
∘ ein Mittel zur Datenfernübermittlung, distal (50), zwischen dem distalen Automaten und dem Server sowie zwischen dem Server (48) und dem distalen Automaten (50),
so dass:
∘ Daten zur Steuerung des Betriebs der Lüftungsvorrichtung (14) von dem Mittel mit Ausgang oder Ausgabe (22) von Überwachungsdaten (24), das der Lüftungsvorrichtung zugeordnet ist, über den proximalen Automaten (32) und dann den distalen Automaten (38) an den Server übermittelt werden können, so dass der Betrieb der Lüftungsvorrichtung (12) vom Internetterminal (54) und dem Internetportal (52) aus ferngesteuert werden kann, und
∘ Daten zur Steuerung des Betriebs der Lüftungsvorrichtung (14) von dem Internetterminal und dem Internetportal über den Server (48), den distalen Automaten (38) und dann den proximalen Automaten (32) an die Lüftungsvorrichtung (14) übermittelt werden können.

7. Lüftungssystem (55) eines Gebäudes (10) zur Fernüberwachung und Fernsteuerung über das Internetnetzwerk nach Anspruch 6, wobei das Mittel zur Datenfernübermittlung (50) ein WLAN- oder GSM- oder GPRS-Netzwerk ist.

8. Verfahren zur Fernsteuerung über das Internetnetzwerk eines Lüftungssystems (55) eines Gebäudes (10) nach Anspruch 6 oder 7, welches wenigstens die folgenden Schritte umfasst:
- Bereitstellen einer Lüftungsvorrichtung (14), der betriebsmäßig ein Mittel mit Ausgang oder Ausgabe (22) von Überwachungsdaten (24) zugeordnet ist, in Zusammenhang mit dem Betrieb der Lüftungsvorrichtung, die von der Lüftungsvorrichtung (14) selbst oder von einem der Lüftungsvorrichtung zugeordneten Erfassungsmittel (30) oder aus der Umgebung der Lüftungsvorrichtung (14) stammen,
- Messen, Erfassen und/oder Sammeln von Überwachungsdaten (24) in Zusammenhang mit dem Betrieb der Lüftungsvorrichtung (14) aus dem Stromverbrauch der Lüftungsvorrichtung im Fall einer dynamischen Vorrichtung, dem Zugvolumen der Lüftungsvorrichtung, der Geschwindigkeit der Motoren, einer Gaskonzentration, wobei die Überwachungsdaten (24) Werte annehmen können, die eine größere Fehlfunktion oder einen größeren Defekt der Lüftungsvorrichtung anzeigen,
- Übermitteln der Überwachungsdaten (24) in Zusammenhang mit dem Betrieb der Lüftungsvorrichtung (14) von dem Mittel mit Ausgang oder Ausgabe (22) von Überwachungsdaten (24) von der Lüftungsvorrichtung zu einem Mittel mit Eingabe oder Empfang (36) eines proximalen Automaten (32),
- Übermitteln der Überwachungsdaten (24) in Zusammenhang mit dem Betrieb der Lüftungsvorrichtung (14) von einem Mittel mit Ausgang oder Ausgabe (22) des proximalen Automaten (32) an ein Mittel mit Eingabe oder Empfang (44) von Daten eines distalen Automaten (38) über ein Mittel zur Datenfernübermittlung, proximal (40),
- Übermitteln der Überwachungsdaten (24) in Zusammenhang mit dem Betrieb der Lüftungsvorrichtung von einem Mittel für Ausgang oder Ausgabe von Daten (42) des distalen Automaten (38) über ein Mittel zur Datenfernübermittlung, distal (50), an einen Server (48),
- Übermitteln der Überwachungsdaten (24) in Zusammenhang mit dem Betrieb der Lüftungsvorrichtung (14) vom Server an ein Internetportal (52) und/oder an ein Smartphone (60),
- Diagnostizieren eines Betriebszustands der Lüftungsvorrichtung (14) anhand der Überwachungsdaten (24) in Zusammenhang mit dem Betrieb der Lüftungsvorrichtung durch ein Diagnosewerkzeug.

9. Verfahren zur Fernsteuerung über das Internetnetzwerk eines Lüftungssystems (55) eines Gebäudes (10) nach den vorhergehenden Ansprüche und Verfahren zur Fernsteuerung über das Internetnetzwerk des Lüftungssystems (55) des Gebäudes (10), wobei die Lüftungsvorrichtung (14) dafür geeignet und dazu bestimmt ist, in Richtung des Scheitelpunkts eines Luftabzugskanals angeordnet zu werden, dem betriebsmäßig ein Mittel mit Eingabe oder Empfang (26) von Überwachungsdaten (28) in Zusammenhang mit dem Betrieb der Lüftungsvorrichtung (14) zugeordnet ist, wobei das Verfahren zur Fernsteuerung über das Internetnetzwerk des Lüftungssystems (55) des Gebäudes (10) wenigstens die folgenden Schritte umfasst:
- Bereitstellen eines Internetportals (52) und eines Servers (48),
- Übermitteln von Daten für die Steuerung vom Server (48) zu einem Mittel für Eingabe oder Empfang (44) von Daten eines distalen Automaten (38) über ein Mittel zur Datenfernübermittlung, distal (50),
- Übermitteln der Daten von einem Mittel für Ausgang oder Ausgabe (42) von Daten des distalen Automaten (38) zu einem Mittel für Eingabe oder Empfang (36) von Daten eines proximalen Automaten (32) über ein Mittel zur Datenfernübermittlung, proximal (40),
- Übermitteln der Überwachungsdaten (28) von einem Mittel für Ausgang oder Ausgabe (34) des proximalen Automaten (32) zu einem Mittel für Eingabe oder Empfang (26) von Daten der Lüftungsvorrichtung (14).

10. Verfahren zur Fernsteuerung über das Internetnetzwerk eines Lüftungssystems (55) eines Gebäudes (10) und Verfahren zur Fernsteuerung über das Internetnetzwerk des Lüftungssystems (55) des Gebäudes (10) nach dem vorhergehenden Anspruch, wobei das Verfahren zur Fernsteuerung über das Internetnetzwerk des Lüftungssystems (55) des Gebäudes (10) ferner einen Schritt zur Einstellung und/oder Behebung einer Fehlfunktion, eines Ausfalls oder eines Defekts der Lüftungsvorrichtung (14) umfasst.

11. Computerprogrammprodukt, umfassend Anweisungen zur Durchführung des Verfahrens zur Fernsteuerung über das Internetnetzwerk eines Lüftungssystems (55) eines Gebäudes (10) nach Anspruch 8 oder das Verfahren zur Fernsteuerung über das Internetnetzwerk eines Lüftungssystems (55) eines Gebäudes (10) und das Verfahren zur Fernsteuerung über das Internetnetzwerk des Lüftungssystems (55) eines Gebäudes (10) nach Anspruch 9 oder 10, wenn dieses Programms durch einen Prozessor (66) ausgeführt wird.

## Claims

1. A ventilation system module (12) for a building (10) for remote checking and control via the internet network:
• comprising:
∘ at least one ventilation device (14) adapted and intended to be placed towards the top outlet of an air extraction duct (18) of the building (10), with which is operationally associated a means for outputting or emitting (22) a piece of check data (24) in relation with the operation of the ventilation device (14), and coming from the ventilation device (14) itself, or from a detection means (30) associated with the ventilation device (14), or from the environment of the ventilation device (14), and a means for inputting or receiving a piece of control data (28) in relation with the operation of the ventilation device (14), and conveying to the ventilation device (14), the output or emission means and/or the input or reception means being proximal,
∘ a proximal automaton (32), programmed and provided with a memory, associated with the output or emission means (22) and with the input or reception means, said proximal automaton (32) having a data output or emission means (34) and a data input or reception means (36),
∘ a distal automaton (38), programmed and provided with a memory, with a data output or emission means (42) and a data input or reception means (44),
∘ a proximal remote data communication means (40), between the proximal automaton (32) and the distal automaton (38) and between the distal automaton (38) and the proximal automaton (32),
∘ a diagnostic tool (62) adapted to carry out diagnostic of an improper operation condition of the ventilation device (14) from the piece of check data (24) in relation with the operation of the ventilation device,
• such that:
∘ a piece of data for checking the operation of the ventilation device (14) can be communicated from the means for outputting or emitting (22) a piece of check data (24) associated with the ventilation device (14) via the proximal automaton (32) and then the distal automaton (38), and the piece of data for checking operation of the ventilation device (14) is likely to be received and communicated via the internet network of a remote server (48) by an internet portal (52) accessible from an internet terminal (54) so as to be able to remotely check operation of the ventilation device (14) from the internet terminal (54) and the internet portal (52) of said remote server (48), said piece of check data (24) being a piece of data representative of the operation condition of the ventilation device (14) from the power consumption of the ventilation device in the case of a dynamic device, the draught flow rate of the ventilation device, the speed of the engines, a gas concentration, the piece of check data (24) being able to take values characteristic of a major malfunction or a major defect of the ventilation device, and
∘ a piece of data for controlling operation of the ventilation device (14) can be communicated to the ventilation device (14), via the distal automaton (38) and then the proximal automaton (32), and is likely to be sent via the internet network of a remote server (48) from an internet terminal (54) and an internet portal (52),
∘ said diagnostic tool (62) is capable of sending an alert to a maintenance operator.

2. The ventilation system module (12) for a building (10) for remote checking and control via the internet network according to claim 1, such that in case of a piece of check data (24) in relation with the operation of the ventilation device (14) considered as characteristic of a major defect, an internet portal (52) and/or a mobile phone (60) and/or an electronic mailbox of a person in charge of checking the ventilation device (14) is arranged to receive an alert likely to be sent via the internet network or GSM or GPRS.

3. The ventilation system module (12) for a building (10) for remote checking and control via the internet network according to any of claims 1 and 2, wherein a ventilation device (14) is a static, dynamic, static-dynamic device, with or without air induction.

4. The ventilation system module (12) for a building (10) for remote checking and control via the internet network according to any of claims 1-3, wherein the proximal remote data communication means (40) is a WI-FI or GSM or GPRS network.

5. The ventilation system module (12) for a building (10) for remote checking and control via the internet network according to any of claims 1-4, which includes several ventilation devices, a proximal automaton being associated with a single ventilation device or with several ventilation devices, a distal automaton, being common to several proximal automatons.

6. A ventilation system (55) for a building (10) for remote checking and control via the internet network including a ventilation system module (12) for a building (10) for remote checking and control via the internet network according to any of claims 1-5 and:
∘ a server (48) having an internet portal (52) accessible from an internet terminal, with a data output or emission means and a data input or reception means,
∘ a distal remote data communication means (50) between the distal automaton and the server and between the server (48) and the distal automaton (50),
such that
∘ a piece of data for checking operation of the ventilation device (14) can be communicated from the means for outputting or emitting (22) a piece of check data (24) associated with the ventilation device to the server, via the proximal automaton (32) and then the distal automaton (38), so as to be able to remotely check operation of the ventilation device (12) from the internet terminal (54) and the internet portal (52), and
∘ a piece of data for controlling operation of the ventilation device (14) can be communicated to the ventilation device (14) from the internet terminal and the internet portal, via the server (48), the distal automaton (38) and then the proximal automaton (32).

7. The ventilation system (55) for a building (10) for remote checking and control via the internet network according to claim 6, wherein the distal remote data communication means (50) is a WI-FI or GSM or GPRS network.

8. A method for remotely checking a ventilation system (55) of a building (10) via the internet network according to claim 6 or 7 which comprises at least the steps of:
- providing a ventilation device (14), with which is operationally associated a means for outputting or emitting (22) a piece of check data (24) in relation with the operation of the ventilation device, and coming from the ventilation device (14) itself, or from a detection means (30) associated with the ventilation device, or from the environment of the ventilation device (14),
- measuring, detecting and/or collecting a piece of check data (24) in relation with the operation of the ventilation device (14) from the power consumption of the ventilation device in the case of a dynamic device, the draught flow rate of the ventilation device, the speed of the engines, a gas concentration, the piece of check data (24) being able to take values characteristic of a major malfunction or a major defect of the ventilation device,
- transmitting the piece of check data (24) in relation with the operation of the ventilation device (14) to the means for outputting or emitting (22) a piece of check data (24) of the ventilation device to a data input or reception means (36) of a proximal automaton (32),
- transmitting the piece of check data (24) in relation with the operation of the ventilation device (14) of a data output or emission means (34) of the proximal automaton (32) to a data input or reception means (44) of a distal automaton via a proximal remote data communication means (40),
- transmitting the piece of check data (24) in relation with the operation of the ventilation device of a data output or emission means (42) of the distal automaton (38) to a server (48) via a distal remote data communication means (50),
- transmitting the piece of check data (24) in relation with the operation of the ventilation device (14) from the server to an internet portal (52) and/or a smart mobile phone (60),
- diagnosing an operation condition of the ventilation device (14) from the piece of check data (24) in relation with the operation of the ventilation device by a diagnostic tool.

9. A method for remotely checking a ventilation system (55) for a building (10) via the internet network according to the preceding claim and a method for remotely controlling the ventilation system (55) of a building (10) via the internet network, the ventilation device (14) being adapted and intended to be placed towards the top outlet of an air extraction duct, with which is operationally associated a means for inputting or receiving (26) a piece of control data (28) in relation with the operation of the ventilation device (14), the method for remotely controlling a ventilation system (55) for a building (10) via the internet network comprising at least the steps of:
- providing an internet portal (52) and a server (48),
- transmitting a piece of data for controlling the server (48) to a data input or reception means (44) of a distal automaton (38) through a distal remote communication means (50),
- transmitting the piece of data from a data output or emission means (42) of the distal automaton (38) to a data input or reception means (36) of a proximal automaton (32) via a proximal remote data communication means (40),
- transmitting the piece of control data (28) from a data output or emission means (34) of the proximal automaton (32) to a data input or reception means (26) of the ventilation device (14).

10. The method for remotely checking a ventilation system (55) for a building (10) via the internet network and method for remotely controlling the ventilation system (55) for a building (10) via the internet network according to the preceding claim, the method for remotely controlling the ventilation system (55) for a building (10) via the internet network further comprising a step of adjusting and/or repairing a malfunction, failure or defect of the ventilation device (14).

11. A computer program product comprising instructions to implement the method for remotely checking a ventilation system (55) for a building (10) via the internet network according to claim 8, or the method for remotely checking a ventilation system (55) for a building (10) via the internet network and the method for remotely controlling a ventilation system (55) for a building (10) via the internet network according to claim 9 or 10, when running this program by a processor (66).
